# EUROPEAN PATENT SPECIFICATION

(11) **EP 1 650 419 B1**
(45) Date of publication and mention of the grant of the patent: **06.08.2008**
(21) Application number: 04105228.3
(22) Date of filing: 21.10.2004
(51) Int. Cl.: F02D 41/02, F02D 41/14, F02D 41/40, F01N 3/20

(54) **Air/Fuel ratio control method**
Steuerverfahren für das Luft-/Kraftstoffverhältnis
Méthode de commande du mélange air-carburant

(43) Date of publication of application: 26.04.2006
(73) Proprietor: Ford Global Technologies, LLC, A subsidary of Ford Motor Company, Dearborn, MI 48126 (US)
(72) Inventor: Yacoub, Yasser Mohammed Sayed, 50858 Köln (DE)
(74) Representative: Drömer, Hans-Carsten

(56) References cited:
- EP-A- 1 026 385
- EP-A- 1 106 798
- US-A1- 2003 145 581
- US-B1- 6 244 047

## Description

The Invention relates to a Method of purging a lean NOₓ trap (LNT) of an Internal Combustuion engine with an In-Cylinder post injection for at least achieving an air to fuel (A/F) ratio close to stoichiometric.

The US 6,422,007 B1 relates to an exhaust system for an internal combustion engine defining a gas flow path and comprising an NOₓ catalytic device for purifying the exhaust gases, a liquid cooled heat exchanger upstream of the NOₓ catalytic device, and a flow control valve, the gas flow path including a cooling gas flow path through the heat exchanger and a bypass gas flow path, the flow control valve adapted to selectively route the flow of gas through the cooling gas flow path for cooling and the bypass gas flow path so that the gas entering the catalytic device is cooled to a desired catalytic operation temperature whereby NOₓ conversion efficiency is maintained.

The US 6,370,868 B1 discloses a system of controlling the purging of a trap located in the exhaust path of an engine comprising:
- means for estimating the mass of NOₓ in the trap:

- means for estimating the probability that operation of said engine will transition to a high speed high load condition before the expiration of a first predetermined time interval:

- means for initiating purging of said trap if the estimated mass of NOₓ in the trap exceeds a NOₓ mass threshold value unless the estimated probability exceeds a probability threshold value; and
- means for increasing said probability threshold each time the estimated probability exceeds the probability threshold value.

The US 6,370,868 B1 further discloses an article of manufacture comprising:
- a storage medium having a computer program encoded therein for causing a microcontroller to control the purging of a trap located in the exhaust path of an engine, said program comprising:

- code for estimating the mass of NOₓ in the trap;
- code for estimating the probability that operation of said engine will transition to a high speed high load condition before the expiration of a first predetermined time interval;
- code for initiating purging of said trap if the estimated mass of NOₓ in the trap exceeds a NOₓ mass threshold value unless the estimated probability exceed a probability threshold value; and
- code for increasing said probability threshold each time the estimated probability exceed the probability threshold value.

Further the US 6,370,868 B1 discloses a method of deciding whether to purge a trap located in the exhaust path of an engine comprising a sequence of the steps of:
- estimating the mass of NOₓ in the trap;
- if the estimated mass of NOₓ in the trap exceeds a NOx mass threshold value then estimating the probability that operation of said engine will transition to a high speed high load condition before the expiration of a first predetermined time interval;
- initiating purging of said trap unless the estimated probability exceeds a probability threshold value;
- if the estimated probability threshold value is exceeded, delaying the decision of whether to initiate the purging of said trap for a second predetermined time interval; and
- increasing said probability threshold each time the purging of said trap is delayed so that delaying the purge operation becomes more improbably once the delay process has begun.

US 6,357,226 B2 describes a control system for use in an internal combustion engine automobile having a NOₓ catalyst system and a urea injection system, comprising: a first temperature sensor placed upstream of the NOₓ catalyst system, the first temperature sensor detecting the temperature of the exhaust gas prior to introduction into the NOₓ catalyst system;
- a NOₓ sensor placed upstream of the NOₓ catalyst system, the NOₓ sensor sensing the level of NOₓ in the exhaust gas;
- a temperature control assembly upstream of the first temperature sensor and NOₓ sensor, the temperature control assembly selectively adjusting the temperature of the exhaust gas prior to the exhaust gas being introduced into the NOₓ catalyst system; and
- a second temperature sensor placed downstream of the NOₓ catalyst system, the second temperature sensor detecting the temperature of the exhaust gas after exiting the NOₓ catalyst system;
- wherein the NOₓ sensor, the second temperature sensor, and the urea injection system are in communication to enhance the removal of NOₓ from the exhaust gas.

The US 6,357,226 B2 further relates to a control system for use in an internal combustion engine automobile having a NOₓ catalyst system, comprising:
- a temperature control assembly placed upstream of the NOₓ catalyst system, the temperature control assembly selectively adjusting the temperature of the exhaust gas prior to the exhaust gas being introduced into the NOₓ catalyst system;
- a first temperature sensor placed downstream of the temperature control assembly and upstream of the NOₓ catalyst system, the first temperature sensor detecting the temperature of the exhaust gas prior to introduction into the NOₓ catalyst system;
- a NOₓ sensor placed downstream of the temperature control assembly and upstream of the NOₓ catalyst system, the NOₓ sensor sensing the level of NOₓ in the exhaust gas; and
- a second temperature sensor placed downstream of the NOₓ catalyst system, the second temperature sensor detecting the temperature of the exhaust gas after exiting the NOₓ catalyst system;
- wherein the temperature control assembly raises the temperature of the exhaust gas prior to the exhaust gas being introduced into the NOₓ catalyst system.

Further the US 6,357,226 describes a control system for use in an internal combustion engine automobile having a NOₓ catalyst system, comprising:
- a temperature control assembly placed upstream of the NOₓ catalyst system, the temperature control assembly selectively adjusting the temperature of the exhaust gas prior the exhaust gas being introduced into the NOₓ catalyst system;
- a NOₓ sensor placed downstream of the temperature control assembly and upstream of the NOₓ catalyst system, the NOₓ sensor sensing the level of NOₓ in the exhaust gas;
- a first temperature sensor placed downstream of the temperature control assembly and upstream of the NOₓ catalyst system, the first temperature sensor detecting the temperature of the exhaust gas prior to introduction into the NOₓ catalyst system;
- a second temperature sensor placed downstream of the NOₓ catalyst system, the second temperature sensor detecting the temperature of the exhaust gas after exiting the NOₓ catalyst system;
- an actuation assembly being capable of selectively actuating the temperature control assembly; and
- an engine control assembly being capable of selectively supplying electrical power to the actuation assembly;
- wherein the engine control assembly selectively supplies electrical power to the actuation assembly in response to at least one sensor selected from the group consisting of the first temperature sensor, the NOₓ sensor, the second temperature sensor, and combinations thereof;
- wherein the temperature control assembly raises the temperature of the exhaust gas prior to the exhaust gas being introduced into the NOₓ catalyst system.

The US 6,347,512 describes an adaptive control method for managing a LNT purge cycle includes a model for predicting the feedgas NOₓ and CO emissions for both stratified and homogeneous engine operating conditions where the parameters of the model are updated based on real-time HEGO sensor measurements in order to adjust the model to ensure robustness of performance in determining the entry and exit condition for purge operation to thereby reduces HC/CO breakthrough, and to improve purge efficiency and fuel economy.

The US 6,735,937 discloses a method for controlling an engine, the engine having a first group of cylinders and a second group of cylinders, each coupled to an intake manifold, the method comprising:
- providing a base air amount and a base fuel amount in stoichiometric proportion to the first group of cylinders and to the second group of cylinders;
- adding excess fuel in addition to said base fuel amount to the first group of cylinders thereby providing a rich air/fuel ratio in the first group of cylinders; and
- adding excess air in addition to said base air amount to the second group of cylinders thereby providing a lean air/fuel ratio in the second group of cylinders.

The US 6,735,937 further discloses a method of controlling and engine, the engine having a first group of cylinders and a second group of cylinders, the engine coupled to an intake manifold, the engine further having an outlet control device for controlling flow exiting the manifold and entering the first group of cylinders, comprising:
- providing a base air amount and a base fuel amount in stoichiometric proportion to the first group of cylinders and to the second group of cylinders;
- adding excess fuel in addition to said base fuel amount to the first group of cylinders thereby providing a rich air/fuel ratio in the first group of cylinders; and
- adding excess air in addition to said base air amount to the second group of cylinders by adjusting the outlet control device thereby providing a lean air/fuel ratio in the second group of cylinders.

Further US 6,735,937 describes a method for controlling and engine, the engine having a first group of cylinders and a second group of cylinders, the engine coupled to an intake manifold, the engine further having an outlet control device for controlling flow exiting the manifold and entering the first group of cylinders, the method comprising:
- requesting a split air/fuel operating mode;
- in response to said request,
- operating the first group of cylinders at a first air/fuel ratio;
- operating the second group of cylinders at a second air/fuel ratio; and
- adjusting the outlet control device to minimize a torque imbalance between the first group of cylinders and the second group of cylinders.

US 6,735,937 also describes a method for controlling temperature of an emission control device coupled to an engine, the engine having a first group of cylinders and a second group of cylinders, the engine coupled to an intake manifold, the engine further having an outlet control device for controlling flow exiting the manifold and entering the first group of cylinders, the method comprising:
- determining a first air/fuel ratio based on the temperature;
- determining a second air/fuel ratio;
- operating the first group of cylinders at said first air/fuel ratio;
- operating the second group of cylinders at said second air/fuel ratio; and
adjusting the outlet control device to minimize a torque imbalance between the first group of cylinders and the second group of cylinders.

The US 2002/0000089 A1 describes A device for use with an internal combustion engine of a lean-burn type, comprising:
- means for generating an air/fuel mixture for the cylinders of the engine in order to provide at least stratified and homogenous operation,
- an exhaust system connected to the engine,
- and an NOₓ-adsorbing catalytic converter arranged in the exhaust system, further comprising a heat exchanger that is fitted upstream of said catalytic converter, wherein said heat exchanger is used to adapt the temperature of the exhaust gas from said engine to an operating state of said catalytic converter.

The device for use with an internal combustion engine of a lean-burn type, further comprises:
- a control system for generating an air/fuel mixture for the cylinders of the engine in order to provide at least stratified and homogenous operation,
- an exhaust system connected to the engine,
- and an NOₓ₋adsorbing catalytic converter arranged in the exhaust system, further comprising a heat exchanger that is fitted upstream of said catalytic converter, wherein said heat exchanger is used to adapt the temperature of the exhaust gas from said engine to an operating state of said catalytic converter.

The US 6,314,722 B1 discloses a method for substantially reducing the amount of NOₓ in exhaust gases from a fossil-fueled engine, using lean-burn combustion, said exhaust gases containing NOₓ and other noxious materials including hydrocarbons, carbon monoxide, carbonaceous particulate matter and mixtures thereof, the method comprising
(a) selecting a catalyst which is effective for NOₓ reduction to N₂ in an oxidizing environment through the reaction of NOₓ with a chemical reductant, said catalyst being effective with regards to said NOₓ reduction within a certain temperature window and at a molar ratio between the amounts of chemical reductant and NOₓ above a certain minimum ratio at which said catalyst is effective with respect to NOₓ reduction,
(b) passing the exhaust gases through a converter including a catalyst bed with said catalyst,
(c) heating up or cooling down the catalyst bed thereby maintaining the temperature inside the catalyst bed within the temperature window at which the catalyst is effective with respect to NOₓ reduction,
(d) adding a chemical reductant to the exhaust gases thereby maintaining the ratio between the molar amounts of chemical reductant and NOₓ above the certain minimum ratio at which said catalyst is effective with respect to NOₓ reduction,
(e) periodically reversing the flow of the exhaust gases through the catalyst bed thereby improving the catalyst bed heat retaining ability and extending the time during which the catalyst bed is within the temperature window at which the catalyst is effective with regards to NOₓ reduction.

The US 6,314,722 B1 also discloses a converter for substantially reducing the amount of NOₓ in exhaust gases from fossil-fueled engine, using lean-burn combustion, said exhaust gases containing noxious materials including NOₓ, hydrocarbons, carbon monoxide, carbonaceous particulate matter and mixtures thereof, said converter comprising a container with an inlet and an outlet for the exhaust gases and a catalyst bed, a switching valve for periodically reversing the flow of the exhaust gases through the catalyst bed by reversing the flow between the inlet and the outlet of the container, said catalyst bed having a catalyst which is effective for NOₓ reduction to N₂ through the reaction of NOₓ with a chemical reductant, said catalyst being effective with regards to said NOₓ reduction within a certain temperature window and at a molar ratio between the amounts of chemical reductant and NOₓ above the certain minimum ratio at which said catalyst is effective with respect to NOₓ reduction, the catalyst bed having a high temperature lean-NOₓ catalyst bed flanked by soot traps, said traps further flanked by low temperature lean-NOₓ catalyst beds on the inlet and outlet sides of the converter.

US 6,304,812 describes a method of optimizing the desired set-points for engine operating variables for an engine with a trap located in the engine exhaust path, said method comprising a sequence of the following steps:
- generating set-points for engine operating variables as functions of engine speed and engine torque based on a finite number of parameters that affect engine and aftertreatment operation;
- utilizing the values of said set-points to determine fuel consumption and exhaust emissions over a predetermined drive cycle using engine and aftertreatment models;
- adjusting the values of said parameters to obtain optimized parameters corresponding to minimum fuel consumptions within predetermined emission constraints and outputting the desired set-point values in tables corresponding to said optimized parameters.

US 6,304,812 B1 also discloses a method of optimizing the desired set-points for engine operating variables for an engine with a trap located in the engine exhaust path downstream from a catalyst, said method comprising a sequence of the following steps:
- generating set-points for engine operating variables as functions of engine speed and engine torque based on parameters that include a post-TWC NOₓ emission index bound (_{EINOx,lim}) and a purge activation threshold (PAT) for a plurality of normal mode calibrations including stoichiometric, lean homogeneous and lean stratified modes of engine operation and a single purge mode calibration;
- utilizing the values of said set-points top determine fuel consumption and NOₓ exhaust emissions over a predetermined drive cycle using engine and aftertreatment models;
- adjusting the values of said parameters to obtain optimized parameters corresponding to minimum fuel consumptions within predetermined emission constraints and outputting the desired set-point values in tables corresponding to said optimized parameters and outputting said purge activation threshold.

Further US 6,304,812 relates to a method of optimizing calibration tables of engine operating variables for an engine with a NOₓ trap located in the engine exhaust path downstream of a catalyst, said method comprising a sequence of the following steps:
- generating calibration tables based on a finite number of parameters that affect engine and aftertreatment operation;
- utilizing the values in said generated tables in a model of said engine to determined fuel consumption and NOₓ emission over a predetermined drive cycle;
- adjusting the values of said parameters to obtain optimized parameters corresponding to minimum fuel consumption within predetermined NOₓ emission constraints over said drive cycle; and
- outputting calibration table data obtained from said optimized parameters.

A system for purging a NOₓ trap located in an exhaust passage of a direct injection engine is disclosed in US 6,244,047 B1 comprising:
- means for determining accumulated amount of NOₓ stored in said trap during a fill portion of a NOₓ trap cycle;
- means for controlling engine air flow; and
- means for initiating a purge portion of said NOₓ trap cycle when the amount of NOₓ stored in the trap exceed a predetermined amount, by abruptly changing the A/F of mixture to a rich A/F mixture during a single engine cycle without substantially changing engine air flow.

US 6,244,047 B1 also discloses a method of purging NOₓ from a NOₓ trap located in the exhaust passage of an internal combustion engine comprising the steps of:
- determining an accumulated amount of NOₓ stored in the NOₓ trap;
- if said accumulated amount of NOₓ exceeds a predetermined amount, abruptly increasing the amount of fuel delivered to a cylinder of said engine to cause an abrupt change in engine operation from a lean air/fuel ratio to a rich air/fuel ratio in the cylinder, said abrupt change of engine operation occurring during a single engine cycle, said rich air/fuel ratio being no richer than is sufficient to purge the NOₓ trap in a single engine cycle but as rich as possible without causing a rich misfire; and
- retarding the timing of firing a spark plug disposed in said cylinder of said engine to avoid any substantial change in torque that would otherwise result from said abrupt change in engine operation.

Further US 6,244,047 B1 describes a system of purging NOₓ from a NOₓ trap located in the exhaust passage of an internal combustion engine comprising:
- fuel delivery means for delivering fuel to a cylinder of said engine;
- means for determining an accumulated amount of NOₓ stored in the NOₓ trap and for controlling said fuel delivery means to abruptly increase the amount of fuel delivered to a cylinder of said engine to cause an abrupt change in engine operation from a lean air/fuel ratio to a rich air/fuel ratio in said cylinder if said accumulated amount of NOₓ exceeds a predetermined amount;
- said abrupt change of engine operation occurring during a single engine cycle, said abrupt change of engine operation occurring during a single engine cycle, said rich air/fuel ratio being no richer than necessary to purge the NOₓ trap in a single engine cycle but as rich as possible without causing a rich misfire; and
- means for retarding the timing of firing a spark plug disposed in said cylinder of said engine to avoid any substantial change in torque that would otherwise result from said abrupt change in engine operation.

An article of manufacture is also disclosed in US 6,244,047 B1 comprising:
- a computer storage medium having a computer program encoded therein for causing the computer to control a multi-cylinder engine with a NOₓ trap located in the exhaust passage thereof, said computer storage medium comprising:

- code for determining an accumulated amount of NOₓ stored in the NOₓ trap;
- code for abruptly increasing the amount of fuel delivered to a cylinder of said engine to cause an abrupt change in engine operation from a lean air/fuel ratio to a rich air/fuel ratio operation in the cylinder if said accumulated amount of NOₓ exceeds a predetermined amount;
- said abrupt change of engine operation occurring during a single engine cycle, said rich air/fuel ratio being no richer than necessary to purge the NOₓ trap in a single engine cycle but as rich an air/fuel ratio as possible without causing a rich misfire; and
- code for retarding the timing of firing a spark plug disposed in said cylinder of said engine to avoid any substantial change in torque that would otherwise result from said abrupt change in engine operation.

The EP 1 281 852 A1 relates to a method of initiating regeneration of a particulate filter for a diesel engine having a common rail injection system permitting, at each engine cycle and in each cylinder of the engine, a fuel injection strategy performing one or more of the following injections: a main injection; a first pre-injection preceding the main injection and performed at the compression stroke; a second pre-injection preceding the main injection and following the first pre-injection ; a first post-injection following the main injection ; and a second post-injection following the first post-injection and performed at the exhaust stroke; the second pre-injection and the first post-injection being performed close enough to the main injection to participate, together with the main injection, in the actual fuel combustion phase. The method of initiating regeneration of the particulate filter provides for implementing, at each engine cycle and in each cylinder of the engine, a fuel injection strategy wherein one or more of the first and second pre-injection, the main injection, and the first and second post-injection are performed, and wherein the timing of one or more of the injections performed is varied with respect to the timing of the injections in particulate filter non-regenerating conditions.

The EP 1 281 852 A2 describes a method of initiating regeneration of a particulate filter for a direct injection diesel engine with common rail system relying on a double post injection, as follows:
- The first post injection is used in combination with pilot and main injection to produce a stable late combustion serving for increasing engine out temperature,
- A second post injection is used to produce hydrocarbons which is used in temperature control.

The US 2003/0145581 A1 discloses a diesel engine fuel injection control method for performing an after injection after a main injection for at least one of rising of diesel engine exhaust gas temperature and decrease of the oxygen concentration in the exhaust gas, wherein said after injection is performed in a range of 40° ATDC to 90° ATDC of a crank angle.

The US 2003 / 0145581 A1 describes a fuel injection control method for diesel engine and regenerative control method for exhaust gas after-treatment device, as follows:
- The first post injection is used to achieve better combustion stability for a retarded main injection whereby a method to control the first post injection based on misfire detection means,
- A second post injection is used to produce hydrocarbon, which is used in temperature control and thus decoupling of temperature from torque.

The US 2002/0194837 A1 relates to an exhaust gas heating system of a direct injection compression ignition internal combustion engine having a plurality of combustion chambers and an exhaust passage ; and
a plurality of direct fuel injection devices, each operable to inject fuel directly into a corresponding one of the plurality of combustion chambers; and
a fuel injection control operable to provide to each one of the plurality of direct fuel injection devices a fuel injection signal during an engine operating cycle, the fuel injection controller being operative to selectively provide to each fuel injection signal a post fuel injection signal timed to provide exhaust gas heating from a resulting post fuel injection, and wherein the fuel injection controller dynamically determines at least one parameter of each post fuel injection signal during one engine operating cycle on at least one temperature related engine operating parameter.

The US 2002/0194837 A1 describes a strategy for double post injection control based on a desired amount of exhaust gas heating, as follows:
- The decoupling of torque from heat generation is achieved using double post injection whereby the first post is used to improve combustion stability,
- Selective injection of post for each cylinder is applied as well as dynamic correction as function of engine operation without a specific description of how such a dynamic correction will be applied.

The US 5,479,775 relates to a diesel internal combustion engine with an exhaust treatment device for the reduction of nitrogen oxides and with a fuel injection system comprising a high-pressure pump and at least one solenoid valve-controlled injection nozzle. The injection nozzle is actuated by an electronic control unit and is intended both for the primary injection, provided for the combustion, and for the additional injection, influencing the effectiveness of the exhaust treatment device. The fuel injection nozzle provided for the primary injection also provides for the secondary injection. The secondary injection takes place as a supplementary injection at the earliest in the region of the end phase of the combustion after the ignition top dead centre.

The US 5479775 describes a strategy for regeneration of an after-treatment device for reduction of nitrogen oxides, as follows:
- An early post injection is used to raise the trap temperature to a desired value,
- Once target temperature is achieved, a late post injection is used to provide hydrocarbons required to purge the trap.

The disclosed method in the EP 1 296 050 A1 is for the regeneration of an exhaust gas processing device in the exhaust gas system of an internal combustion engine, particularly a particle filter in the exhaust gas system of a diesel engine, whereby the temperature and/or hydrocarbon concentration in the exhaust gas are/is increased by the subsequent injection of fuel in the work stroke of the engine. The predetermined values for the suction pressure and/or the air mass flow are so altered dependent upon a value correlated with the ambient temperature that through the subsequent injection stable values are achieved for the exhaust gas temperature and/or the hydrocarbon concentration in the exhaust gas.

The EP 1 106 798 A discloses Method and an Apparatus for a Noₓ- and/or Soₓ Regeneration of a NOₓ storage catalytic converter which is arranged in an exhaust system of a diesel engine and which is acted on by an increased reducing-agent mass flow in the exhaust gas in order to be regenerated. The increase in the reducing-agent mass flow is achieved by completely or in part by an after injection of fuel into the diesel engine and/or into the exhaust system.

In-cylinder post injection (i.e., injection of additional fuel into all or some cylinders after the respective main injection but still during the power stroke) is an efficient method not only for increasing exhaust gas temperature but also for achieving A/F ratio close to stoichiometric. Depending on the quantity and start of injection of the post injection, a fraction of it may burn in the cylinder and contribute both to engine torque as well as to engine out temperature, whereas the remaining fraction will evaporate and leave the engine as unburned hydrocarbons (HC). In that sense, post injection is an effective mean to achieve the two basic functionalities (reduction of oxygen level in the exhaust stream as well as providing reducing agents HC and CO through partial combustion) required during the rich purging phase of the LNT. The quantity and especially timing of the post injection have to be calibrated very carefully in order to ensure oxygen level less than or equal to one percent subject to the following boundary conditions:
Transient operation on vehicle (rich pulse few seconds every few minutes)
   a. Neutral torque (same for lean and rich operation), especially during lean-to-rich and rich-to-lean transitions
   b. LNT temperature within pre-defined range
   c. Tailpipe emissions of HC and CO are below certain limit
   d. Feed gas soot/smoke levels are below certain limit
   e. Combustion stability and noise levels
II. Steady state operation on engine dyno (calibration exercise)
   a. Neutral torque
   b. Maximum temperature limits for the exhaust manifold, turbine, LNT, and other exhaust system components.
   c. Temperature gradients within limits for the LNT and other components of exhaust gas aftertreatment.
   d. Feed gas of reducing agent (HC and CO) are above a certain limit
   e. Tailpipe emissions of HC and CO are below limit
   f. Feed gas soot/smoke levels are below certain limit
   g. Combustion stability and noise levels as analyzed using measured in-cylinder pressure
   h. Robustness limits for aging and drift of FI system

The sensitivity of post injection combustion to injection timing is especially critical at lower engine loads. Under those conditions, the energy released by the combustion of the main fuel quantity is rather low. If the post injection is timed too late, only unburned HCs will be generated. On the other hand, if it is timed too early, it will burn completely and increase the torque output of the engine thus violating the torque neutrality limit. This torque increase can be compensated for by reducing the main quantity, however, there is a lower limit on injection quantities below which the fuel injection hardware does not operate sufficiently accurately, and this lower limit is close to the main fuel quantity at low engine load (4-6mg/stroke). At very low engine loads, it may not be possible to achieve sufficiently the desired target of one percent oxygen level due to the fact that the required amount of post injected fuel cannot be injected without violating either the HC concentration limits or the torque increase limits mentioned above.

A further problem becomes apparent during transient operation especially at low vehicle speeds (with frequent decelerations and idle periods (urban driving)). As opposed to in-direct injection, homogeneous mixture combustion typical to Otto engine, it is extremely difficult to achieve the desired lambda control (subject to the tail pipe emission constraint on HC and CO) during the transient trajectory because of the non-homogeneous mixture combustion characteristic of direct injection Diesel engines. Moreover, a prolonged attempt for the rich pulse will result in excessive temperature rise in the LNT temperature resulting in a rapid release of the trapped NOx without conversion to the non-polluting elements. The importance of this should not be underestimated especially when one considers more transient regulatory cycles, such as the FTP75 required for the US market as opposed to the European regulatory NEDC test cycle with more steady-state phases.

With current technology, it is possible to achieve rich purge of the LNT by making use of post injection in the expansion stroke. However, complex control strategies are required to deal with the strong coupling between the two functionalities required, mainly, oxygen level of one percent or less and sufficient level of the reduction gases (HC and CO) subject to neutrality of torque, tail pipe emissions of HC and CO, as well as LNT temperature levels. These limitations result in an overall limited trapping efficiency, inability to purge the trap under low load conditions, as well as excessive calibration effort. Further the current state of art describes methods relying on double post injection only disclosing:
- De-coupling of engine torque from exhaust temperature control and
- Interactions for combustion stability..

The above mentioned problems are solved by the features of claim 1.

For example a diesel lean NOx trap (LNT) absorbs and stores emissions of oxides of nitrogen (NOx) during the lean phase. When saturated with NOx molecules, a rich operation phase (order of few seconds) is required to purge the trap. This allows the release of the stored NOx molecules and its reduction into non-polluting components, mainly nitrogen, carbon dioxide, and water vapour. The frequency of this purging action is determined by the engine out NOx emissions and the storage capacity of the LNT which is also dependent on the temperature of the exhaust gas, typically a loading cycle will span few minutes of lean (normal operation mode for a diesel engine) which is followed by few seconds in the purging rich mode. Hence, for secure LNT operation, there must be means to increase the fuel to air ratio (F/A) in the exhaust gas to lambda (lambda is the air to fuel ratio relative to stoichiometric value) between 0.90 and 0.98 (oxygen <= 1%) with sufficient level of reducing agents (HC and CO) under all engine operating conditions.

In a preferred embodiment, this invention deals with a direct injection-powered vehicle equipped with an after-treatment system that trap emissions of NOx under lean operation (normal mode) and will periodically require achieving rich purge to convert the trapped NOx into non-polluting gases. An engine management system includes the ability of multiple fuel injections, notably injections during the expansion stroke and after the main injection (post-injection). Preferably separate multiple (at least two) post injections after the main injection train are applied in the expansion stroke.

The introduction of multiple post injections (two or more) is intended to achieve the following functionalities:
- Pre-conditioning of the state of gas in-cylinder through partial combustion of the current injection in preparation for the next injection.
- Stimulation the completion of the in-cylinder combustion of the previous injection through the generation of a strong mixing effect resulting from the increased turbulence level caused by the high kinetic energy of the current injection.
- Proportionally splitting the total quantity required on several injections.
- Decoupling functionality of upstream trap combustion (either in-cylinder or in the exhaust manifold) and HC production. In this sense, for non-close coupled injections, the timing of injection is placed far enough to ensure within a predetermined range of change in its quantity to supply the reducing agent (HC and CO as a result of the partial combustion of the posted injected fuel) and at the same time torque neutrality is sustained. The lower range of the quantity change is determined by the torque neutrality criterion and the upper limit is determined by the concentration of reducing agent in the exhaust gas.

The realization of such functionalities through multiple injections in the expansion stroke results in:
- Improved ability to achieve the target of one percent oxygen level or less in the exhaust gas. The splitting of the required post injection quantity on multiple injections allows calibration of quantity and timing of each injection while respecting the boundary conditions for neutral engine torque (same torque interpretation for a given driver demand), cycle-to-cycle variability, and HC limitation. On the other hand, attempting to achieve the same result with a single post injection may prove to be more difficult (time-intensive), if not impossible, because of the inability to achieve stable in-cylinder combustion of a large single post quantity. In general, tight A/F ratio control for stoichiometric or less values (lambda 0.9 to 1.0) can be achieved over a large area of the engine map.
- Robust in-cylinder combustion of the multiple injection train for large deviations in the air path, engine thermal level e.g. cold start, environmental deviations such as sub-zero ambient temperature and low ambient pressure at high altitude. This eliminates the requirement for inter-cooler bypass for the case of turbocharged engines as well as the requirement for intake air heating.
- Limiting the level of fuel oil dilution by splitting a single large quantity of post injection on two or more post injections.
- Improved A/F ratio control under real world transient drive cycles as a result of the late combustion in the expansion stroke without perceivable torque production. This is expected to improve the overall trapping efficiency by limiting the non-desired rapid NOx desorption if trap temperature exceeds a pre-defined limit.
- For high sulphur content fuels, heating strategies required for desulphurization of the LNT can very easily make use of wobbling approaches (lean-to-rich-to-lean) by closed loop control of the non-torque producing post injections to achieve the required lambda control without the need for excessive calibration effort of two modes (lean/rich) with the challenging task of retaining neutral torque requirement during transitions.

A more complete understanding of the present invention may be had from the following description which should be read in conjunction with the drawings, in which:
Fig. 1 is a strategy block diagram for determining of injection signal, and
Fig. 2 is an Engine out oxygen concentration on CEC cycle test.

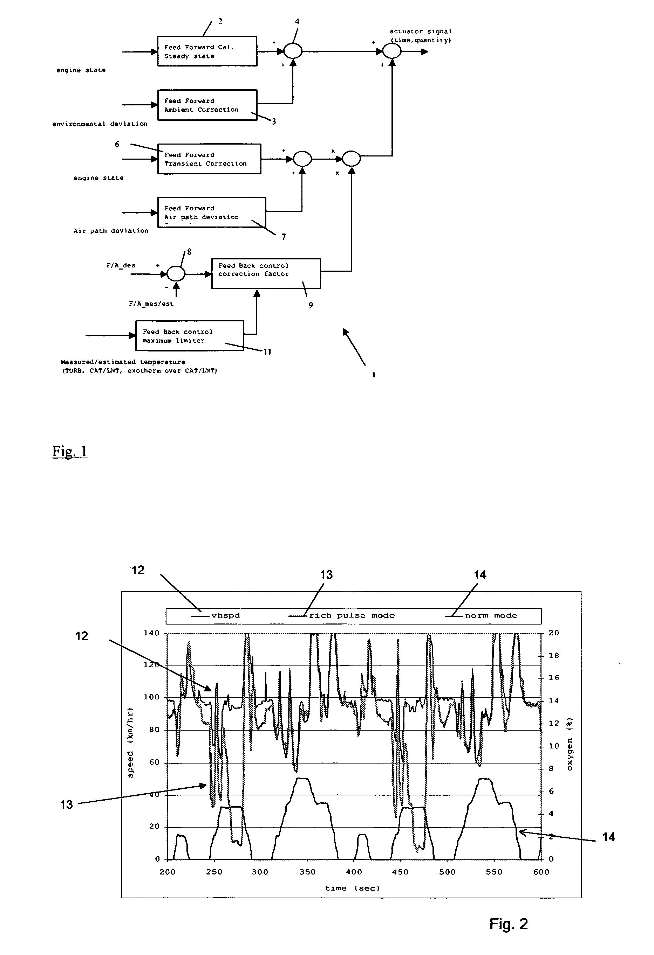

An implementation of the multiple post strategy 1 is shown in figure 1. In its simplest form, a base steady state calibration 2 (Feed Forward Calibration Steady state) as a function of engine state and corrected for environmental deviation (timing and quantity maps as function of engine speed and driver demand (total fueling or indicated torque)), including correction maps/curves based on engine thermal level (coolant temperature/cylinder head temperature) and environmental deviation (ambient temperature and pressure) (Feed Forward Ambient Correction 3) . In this implementation, the injection signal is controlled in an open loop manner 4.

In an alternative, more sophisticated implementation, the post injection strategy includes a feedback term, which corrects the post injection such that allowable F/A (or A/F) ratio levels are achieved. As shown in figure 1, a feed forward transient correction 6 as a function of engine state is further corrected as a function of the deviation in the air path (error signal for manifold pressure/mass air flow/manifold temperature)(Feed Forward Air path deviation correction 7). The purpose of this part is to achieve a steady state engine-dyno calibration with modified target F/A ratio and modified boundary conditions. The closed loop controller 8 responds to the error between desired and measured (or estimated) target F/A ratio by trimming the transient correction part (Feed back control Correction factor 9). The control authority of the transient correction factor is calculated as a function of the measured exhaust gas temp (turbine inlet temperature, catalyst/Nox trap temperature, catalyst/NOx trap exotherm, etc.) (Feed back control maximum limiter 11).

The function of the controller x-x is implemented as a multiplication i.e. the output of the closed-loop control is multiplied by the summation (Feed Forward transient correction plus Feed Forward air path deviation correction).

For an injection system capable of preferably two post injections, two implementations of the above structure are given below:
Case I: rich mode purging of LNT
   - The steady state feed forward calibration 2 will target the minimum trap temperature required to keep the trap above its light off temperature and will be carried for the first and second post injection quantity and timing.
   - The transient feed forward correction 6 calibration will target the desired F/A ratio and will be carried for the first and second post injection quantity, whereby the closed loop correction will only be applied to the second post injection (minimal contribution to torque production).
   - The air path deviation will be calibrated such that for large deviations, the final output will reduce to temperature control (sustain LNT above light off temperature) and for smaller deviation to trimming feed-forward term for F/A ratio control. The second post injection quantity will be corrected in closed-loop to achieve the desired F/A ratio value using a classical controller (PID), which is limited.
Case II: heating mode for desulphurization of LNT
   - The steady state feed forward calibration 2 will target a lean heating mode with exhaust oxygen percent greater than three percent and will be carried for the first and second post injection quantity and timing.
   - The transient feed forward correction calibration 6 will target a rich heating mode with exhaust oxygen percent less than one percent. The desired F/A ratio will be carried for the first and second post injection quantity, whereby the closed loop correction will only be applied to the second post injection (minimal contribution to torque production).
   - The air path deviation will be calibrated such that for large deviations, the final output will reduce to the lean mode and for smaller deviation to trimming feed-forward term for F/A ratio control. The second post injection quantity will be corrected in closed-loop to achieve the desired F/A ratio value using a classical controller (PID), which is limited.

One important aspect in the above implementations is that the pre-requirement for multiple post injection to implement such a strategy 1 since one should be able to achieve dynamic correction of the quantity of post injection without perceivable intervention from the driver to achieve same torque for a given demand. In this sense, the first post injection (close coupled to main injection) is not trimmed using the feedback control. On the other hand, the second injection is placed far enough not to produce any torque and thus for corrected dynamically.

The result of multiple post injection for rich purge mode on the low speed 12 (32 km/hr) ECE part of the regulatory cycle is shown in figure 2. The oxygen concentration is compared for the rich purge pulse (in thick red 13) to the normal lean mode (in thin blue 14). The desired level of one percent of the oxygen level is achieved at such low speeds as a result of the double post injection approach as outlined earlier.

With the aforementioned Method a detailed specific strategy relying on at least double post injection to achieve air to fuel ratio control whereby:
- Coordinated temperature and air-to-fuel ratio control
- Transient correction as function of air path deviations,
for the purpose of purging as well as desulphurization of LNT is disclosed.

## Claims

1. Method of purging a lean NOₓ trap (LNT) of an Internal Combustuion engine with an In-Cylinder post injection for at least achieving an air to fuel (A/F) ratio close to stoichiometric, whereby at least two seperat post injections are applied in the expansion stroke after a main injection train, so that a torque produce is decoupled from the A/F-control **characterized by** a pre-conditioning of the state of gas in-cylinder through partial combustion of the current injection in preparation for the next injection.

2. Method according to claim 1, **characterized by** a stimulation the completion of the in-cylinder combustion of the previous injection through the generation of a strong mixing effect resulting from the increased turbulence level caused by the high kinetic energy of the current injection.

3. Method according to claim 1 or 2 **characterized in, that** a total quantity required is proportionally split on several injections.

4. Method according to one of the preceding claims, **characterized in, that** a lower range of the quantity change is determined by the torque neutrality criterion whereby an upper limit is determined by the concentration of reducing agent in the exhaust gas.

5. Method according to one of the preceding claims, **characterized in, that** the injection signal is preferably controlled in an open loop manner.

6. Method according to one of the preceding claims, **characterized in, that** a closed loop controller responds to an error between desired and measured target F/A (or A/F) ratio by trimming a transient correction part.

## Patentansprüche

1. Verfahren zur Reinigung eines LNT (lean NOₓ trap) eines Verbrennungsmotors mit einer Nacheinspritzung im Zylinder, um mindestens ein Luft/Kraftstoff-Verhältnis (L/K-Verhältnis) nahe stöchiometrisch zu erreichen, wobei mindestens zwei getrennte Nacheinspritzungen im Verbrennungshub nach einem Haupteinspritzzug ausgeübt werden, so dass ein Drehmomentprodukt von der L/K-Steuerung abgekoppelt wird, **gekennzeichnet durch** eine Vorbehandlung des Gaszustands im Zylinder **durch** teilweise Verbrennung der derzeitigen Einspritzung als Vorbereitung für die nächste Einspritzung.

2. Verfahren nach Anspruch 1, **gekennzeichnet durch** eine Stimulierung der Beendigung der Verbrennung der vorherigen Einspritzung im Zylinder **durch** Erzeugung einer starken Mischwirkung, die sich aus dem **durch** die hohe kinetische Energie der derzeitigen Einspritzung verursachten erhöhten Turbulenzgrad ergibt.

3. Verfahren nach Anspruch 1 oder 2, **dadurch gekennzeichnet, dass** eine erforderliche Gesamtmenge proportional in mehrere Einspritzungen geteilt wird.

4. Verfahren nach einem der vorhergehenden Ansprüche, **dadurch gekennzeichnet, dass** ein unterer Bereich der Mengenänderung durch das Drehmomentneutralitätskriterium bestimmt wird, wobei eine Obergrenze durch die Konzentration des Reduktionsmittels im Abgas bestimmt wird.

5. Verfahren nach einem der vorhergehenden Ansprüche, **dadurch gekennzeichnet, dass** das Injektionssignal vorzugsweise mit einem offenen Regelkreis gesteuert wird.

6. Verfahren nach einem der vorhergehenden Ansprüche, **dadurch gekennzeichnet, dass** eine Regelung durch Abgleich eines Übergangskorrekturteils auf einen Fehler zwischen dem Soll- und dem gemessenen K/L-(oder L/K-)Zielverhältnis reagiert.

## Revendications

1. Procédé d'épuration d'un piège à NOₓ pauvre (ou LNT) d'un moteur à combustion interne par une post injection dans le cylindre afin d'obtenir au moins un rapport de mélange air-carburant proche du rapport stoechiométrique, ce par quoi au moins deux post injections séparées sont appliquées durant la course de détente après un train d'injection principal, de telle façon qu'un produit de couple soit découplé de la commande de mélange air-carburant, **caractérisé par** un pré conditionnement de l'état du gaz dans le cylindre au moyen d'une combustion partielle durant l'injection en cours, en préparation de l'injection suivante.

2. Procédé selon la revendication 1, **caractérisé par** une stimulation de la fin de la combustion dans le cylindre de l'injection précédente par production d'un effet mélangeur puissant résultant du niveau de turbulence accru causé par la forte énergie cinétique de l'injection en cours.

3. Procédé selon la revendication 1 ou 2,
**caractérisé en ce qu'**une quantité totale requise est répartie proportionnellement sur plusieurs injections.

4. Procédé selon l'une des revendications précédentes, **caractérisé en ce qu'une** plage inférieure du changement de quantité est déterminée par le critère de neutralité de couple, ce par quoi une limite supérieure est déterminée par la concentration d'agent réducteur dans les gaz d'échappement.

5. Procédé selon l'une des revendications précédentes, **caractérisé en ce que** le signal d'injection est préférablement commandé en boucle fermée.

6. Procédé selon l'une des revendications précédentes, **caractérisé en ce qu'**un contrôleur en boucle fermée répond à une erreur entre les rapports cibles air-carburant ou carburant-air voulus et mesurés en ajustant une part de correction de l'état transitoire.
